# EUROPÄISCHE PATENTSCHRIFT

(11) **EP 0 350 678 B1**
(45) Veröffentlichungstag und Bekanntmachung des Hinweises auf die Patenterteilung: **21.07.1993**
(21) Anmeldenummer: 89111377.1
(22) Anmeldetag: 22.06.1989
(51) Int. Cl.: F16C 11/06

(54) **Kugelgelenk**
Ball-joint
Articulation à rotule

(30) Priorität: 14.07.1988 DE 3823777
(43) Veröffentlichungstag der Anmeldung: 17.01.1990
(73) Patentinhaber: TRW Fahrwerksysteme GmbH & Co. KG, 40547 Düsseldorf (DE)
(72) Erfinder: Henkel, Günther, D-4000 Düsseldorf (DE)
(74) Vertreter: Stenger, Watzke & Ring Patentanwälte

(56) Entgegenhaltungen:
- EP-A- 0 132 598
- EP-A- 0 213 314
- DE-C- 3 619 004
- FR-A- 2 250 042
- FR-A- 2 253 163

## Beschreibung

Die Erfindung betrifft ein Kugelgelenk für Kraftfahrzeuge, mit einer zwischen einem Gelenkgehäuse und einem Kugelkopf eines dreh- und kippbeweglichen Kugelzapfens eingesetzten Lagerschale aus einem elastischen Kunststoff, die sich mit Rippen an ihrer Außenseite im Gelenkgehäuse abstützt, wobei unter dem Einfluß einer Gelenkvorspannung oder -belastung auf der Innenseite der Lagerschale in den zwischen den Rippen liegenden Bereichen Schmiertaschen ausgebildet sind.

Aus der DE-C-33 26 960 ist bereits ein Kugelgelenk mit einer zweiteiligen Lagerschale bekannt geworden, deren innenliegende Lagerschale auf ihrer Außenseite mehrere Rippen zur Abstützung im Gelenkgehäuse trägt. Da die Wandstärke im Bereich der Rippen die Spaltbreite zwischen einem Gelenkgehäuse und einem Kugelkopf übersteigt, bildet die weichelastische Lagerschale zwischen den Rippen flache Schmiertaschen aus. Durch die ebenfalls in Meridionalrichtung verlaufenden Schmiertaschen wird ein Kugelkopf bei einer Dregbewegung besser befettet als bei einer Kippbewegung. Bei einer Drehbewegung wird nämlich Fett aus den Schmiertaschen unter die Rippen befördert, wogegen bei einer Kippbewegung die Lagerflächen unter den Rippen trocken laufen. Bei diesem Kugelgelenk ist deshalb das Kippmoment merklich höher als das Drehmoment.

Die DE-B-24 34 490 offenbart ein Kugelgelenk mit einer hartelastischen Innenschale, die von einer materialelastischen Außenschale getragen ist. Die Außenschale stützt sich wiederum mit meridional verlaufenden Rippen im Gelenkgehäuse ab, so daß sich die Lagerfläche zwischen den Rippen durchbiegen kann. Hierdurch entstehen wiederum meridional verlaufende Schmiertaschen, mit dem Nachteil einer Schmierung, die bei Kippbewegungen schlechter ist als bei Drehbewegungen.

Aus der DE-A-36 39 963 ist ein Kugelgelenk für Übertragungsgestänge in Kraftfahrzeugen mit einer zwischen einem Gelenkgehäuse aus Kunststoff und einem Kugelkopf eingesetzten Lagerschale aus Kunststoff bekannt, wobei die Lagerschale mit Vorsprüngen an ihrem Mantel Hinterschnitte an der Innenwand des Gelenkgehäuses hintergreift. Die Vorsprünge der Lagerschale sind in Nuten der Innenwand des Gelenkgehäuses einschiebbar, die sich von einer Stirnseite des Gelenkgehäuses aus in Zapfenachsrichtung erstrecken, und durch Öffnungen der Nutflanken in Vertiefungen der Innenwand des Gelenkgehäuses eindrehbar, deren im wesentlichen in Umfangsrichtung sich erstreckende Begrenzungswände Hinterschnitte zum Abstützen der Vorsprünge bilden.

Außerdem sind Kugelgelenke bekannt geworden, in deren Lagerschalen Schmiernuten eingearbeitet sind, die ausschließlich in Zapfenachsrichtung verlaufen. Die Schmiernuten bedingen jedoch eine ungleichmäßige Wandstärke der Lagerschale. Dies wiederum hat zur Folge, daß die Lagerfläche nach dem Schwinden des Lagerschalenmaterials zwischen den Schmiernuten nicht mehr an einem eingesetzten Kugelkopf anliegt. Die Kanten der Schmiernuten stehen dann gegenüber den dazwischenliegenden Lagerflächen in Radialrichtung vor. Der Kugelkopf liegt deshalb nach der Montage nur im Bereich dieser vorstehenden Kanten auf und streift bei einer Drehbewegung das eingegebene Fett in die Schmiernuten ab. Der dann auftretende Trockenlauf führt zu erhöhter Reibung und zu ansteigendem Drehmoment. Außerdem hat dieses Kugelgelenk den Nachteil, daß die Herstellung der Lagerschale aufwendig ist, weil beim Spritzgießen ein Kernstempel mit Stegen für die Schmiernuten erforderlich ist.

Davon ausgehend liegt der Erfindung die **Aufgabe** zugrunde, ein Kugelgelenk mit verbesserter Gelenkschmierung zu schaffen, das insbesondere gleichmäßigere Kipp- und Drehmomente aufweist und dessen Herstellung weniger aufwendig ist.

Zur technischen **Lösung** dieser Aufgabe ist vorgesehen, daß die Rippen der Lagerschale bezüglich der Gelenkachse (Achse des ungekippten Kugelzapfens) schräg verlaufend gewunden sind.

Bei einem erfindungsgemäßen Kugelgelenk verlaufen also die Rippen in Umfangsrichtung um die Gelenkachse und zusätzlich in Richtung der Gelenkachse. Bei montiertem Kugelgelenk verformt sich daher die Lagerschale zwischen den Rippen unter dem Einfluß einer Vorspannung oder einer Belastung. Durch den gewundenen Verlauf der Rippen bilden sich dabei in der Lagerfläche auch gewundene Schmiertaschen zwischen den Rippen aus. Hierdurch wird eine Befettung der Lagerflächen unter den Rippen sowohl bei einer Kippbewegung als auch bei einer Drehbewegung des Kugelzapfens möglich. Die Schmiertaschen sind nämlich so wohl in Gelenkachsrichtung als auch in Umfangsrichtung auf beiden Seiten der unterhalb der Rippen befindlichen Lagerflächen angeordnet. Bei jeder Bewegung des Kugelzapfens wird also Fett aus den Schmiertaschen auf die Lagerflächen unter den Rippen befördert, so daß der Schmierfilm dort nicht abreißt. Der dauerhafte und zusammenhängende Schmierfilm wird mit einer beliebigen Bewegung des Kugelzapfens nach dem Zusammenbau des Kugelgelenkes erzeugt. Danach ist eine ausreichende Befettung des Kugelzapfens sowohl bei Dreh- als auch bei Kippbewegungen garantiert, so daß das Kugelgelenk bei Dreh- und Kippbewegungen etwa die gleichen Momente aufweist. Durch die dauerhafte hydrodynamische Schmierung entsteht im Kugelgelenk praktisch kein Verschleiß, so daß niedrige Momente selbst bei dauernder Zugbelastung des Kugelzapfens während der gesamten Gelenklebensdauer erhalten bleiben. Durch die verbesserte Befettung wird auch die Streuung der Momente infolge der durch Einzelteiltoleranzen schwankenden Gelenkvorspannung erheblich eingeengt. Schließlich kann die Lagerschale mit einem weniger aufwendigen Kernstempel und somit kostengünstiger hergestellt werden.

Bei einer bevorzugten Ausgestaltung der Erfindung ist vorgesehen, daß die mit den gewundenen Rippen versehene Lagerschale aus einem hartelastischen Kunststoff, insbesondere aus einem Acetal-Harz besteht. Die hartelastische Lagerschale unterliegt zwischen den Rippen einer nur geringen Verformung, so daß weiche Übergänge zwischen den Schmiertaschen und den Lagerflächen unter den Rippen entstehen, welche einen zusammenhängenden Schmierfilm begünstigen.

Bei einer bevorzugten Ausgestaltung sind die Rippen der Lagerschale gleichmäßig um die Gelenkachse verteilt, so daß die Momente relativ unabhängig von der Richtung der Belastung des Kugelzapfens sind. Die Unabhängigkeit von der Belastungsrichtung des Kugelzapfens wird noch verbessert, wenn sämtliche Rippen in der gleichen Richtung gewunden sind. Hierdurch können nämlich zwischen Rippenpaaren form- und größengleiche Schmiertaschen erzeugt werden.

Wenn die Summe der Windungswinkel aller Rippen um die Gelenkachse etwa 360^{o} oder mehr beträgt, transportiert der Kugelkopf bei jeder Kippbewegung Fett aus den Schmiertaschen in die Lagerflächen unter den Rippen. Für eine dauerhafte und gleichmäßige hydrodynamische Schmierung können vier um die Gelenkachse gewundene Rippen ausreichend sein.

Bei einer weiteren Ausgestaltung gehen die Rippen etwa tangential von einem Rand einer Ausschlagöffnung der Lagerschale für den Kugelzapfen aus, so daß die Schmiertaschen um den Rand der Ausschlagöffnung weniger ausgeprägt sind. Hierdurch wird verhindert, daß bei Kippbewegungen des Kugelzapfens größere Mengen des Fettes aus der Durchtrittsöffnung gedrückt werden.

Wenn die Rippen zumindest bis zu einer senkrecht durch die Gelenkachse verlaufenden Äquatorialebene des Kugelkopfes gewunden sind, wird die erfindungsgemäße Schmierwirkung zumindest bei Belastungsrichtungen erreicht, die den Kugelkopf gegen die berippten Lagerflächenbereiche drücken.

Bei einer bevorzugten Ausgestaltung ist vorgesehen, daß die Rippen auf einem kugelförmigen Abschnitt der Lagerschale angeordnet sind und sich an einer kugelförmigen Gehäuseaufnahme abstützen. Die Lagerschale weist also zwischen den Rippen eine konstante und relativ geringe Wandstärke auf, so daß sich die gewünschten Schmiertaschen bilden können.

Bei einer weiteren Ausgestaltung ist vorgesehen, daß die Lagerschale zusätzlich meridional verlaufende Rippen aufweist, die jeweils von einem Ende einer gewundenen Rippe ausgehen und deren Erstreckung in Gelenkachsrichtung etwa derjenigen der gewundenen Rippen entspricht. Auf diese Weise wird mit relativ kurzen Rippen eine Verdopplung der Zahl der Schmiertaschen erreicht.

Die Lagerschale ist mit einem relativ einfachen Spritzwerkzeug herstellbar, wenn die Seitenwände der Rippen in Gelenkachsrichtung ausgerichtet sind. Bei der Herstellung können Außenform und Kernstempel des Spritzwerkzeuges einfach in Gelenkachsrichtung auseinandergezogen werden.

Bei einer erfindungsgemäßen Ausgestaltung ist vorgesehen, daß die Lagerschale zweiteilig ausgebildet ist, wobei eine mit um die Gelenkachse gewundenen Rippen versehene äußere Lagerschale stirnseitig eine Ausnehmung für eine weichelastische innere Lagerschale hat. Hierbei sorgt die Außenschale für eine ideale Schmiermittelverteilung und stellt die weichelastische Innenschale die Vorspannung des Kugelkopfes ein. Die verbesserte Schmiermittelverteilung und die definierte Vorspannung des Kugelkopfes haben einen hervorragenden Ausgleich von Einzelteiltoleranzen zur Folge.

Um die gewünschte Verformung der Lagerschale bei der Montage zu erleichtern, kann diese meridional verlaufende Schlitze aufweisen, die von der Ausschlagöffnung für den Kugelzapfen ausgehen. Beim Einsetzen des Kugelkopfes ist dann eine leichtere Aufweitbarkeit gegeben und wird eine Uberbeanspruchung des Lagerschalenmaterials vermieden.

Bevorzugt erstrecken sich die meridionalen Schlitze etwa bis zu einer senkrecht durch die Gelenkachse verlaufenden Äquatorialebene des Kugelkopfes, so daß dieser mit seinem größten Durchmesser beim Einsetzen in die Lagerschale lediglich einen gut aufweitbaren Lagerschalenbereich überstreicht.

Da die Schlitze zugleich die Wirkung von Schmiernuten haben, sind bei einer praktischen Weiterbildung die Rippen zwischen der geschlossenen Stirnseite der Lagerschale und der durch das Ende der Schlitze bestimmten Umfangslinie angeordnet, so daß die gesamte Gleitfläche relativ gleichmäßig mit dem Schmiermittel versorgt wird.

Schließlich ist bei einer Weiterbildung der Erfindung vorgesehen, daß die Lagerschale zwei Gruppen von Rippen hat, die auf verschiedenen Seiten einer senkrecht zur Gelenkachse verlaufenden Ebene angeordnet und in verschiedenen Richtungen gewunden sind, wodurch ein Fördern des Schmiermittels in einer Schraubenlinie aus der Lagerschale heraus bei einer Drehbewegung des Kugelzapfens behindert wird.

Weitere Einzelheiten und Vorteile des Gegenstandes der Erfindung ergeben sich aus der nachfolgenden Beschreibung der zugehörigen Zeichnungen, die drei bevorzugte Ausführungsformen eines erfindungsgemäßen Kugelgelenkes zeigen. In den Zeichnungen zeigen:
- Fig. 1: ein Kugelgelenk mit zweiteiliger Lagerschale, deren Außenschale ausschließlich gewundene Rippen aufweist im Längsschnitt;
- Fig. 2: dasselbe Kugelgelenk im perspektivischen Sprengbild;
- Fig. 3: die äußere Lagerschale desselben Kugelgelenkes in vergrößerter perspektivischer Darstellung;
- Fig. 4: dieselbe äußere Lagerschale in der Untersicht;
- Fig. 5: dieselbe äußere Lagerschale im Längsschnitt;
- Fig. 6: eine äußere Lagerschale mit gewundenen und meridional verlaufenden Rippen in perspektivischer Darstellung;
- Fig. 7: dieselbe äußere Lagerschale in der Untersicht;
- Fig. 8: dieselbe äußere Lagerschale im Längsschnitt;
- Fig. 9: ein Kugelgelenk mit einteiliger und längsgeschlitzter Lagerschale im Längsschnitt;
- Fig. 10: dasselbe Kugelgelenk im perspektivischen Sprengbild;
- Fig. 11: Die Lagerschale desselben Kugelgelenkes in vergrößerter perspektivischer Darstellung;
- Fig. 12: dieselbe Lagerschale in der Unteransicht;
- Fig. 13: dieselbe Lagerschale im Längsschnitt;
- Fig. 14: dieselbe Lagerschale in der Draufsicht.

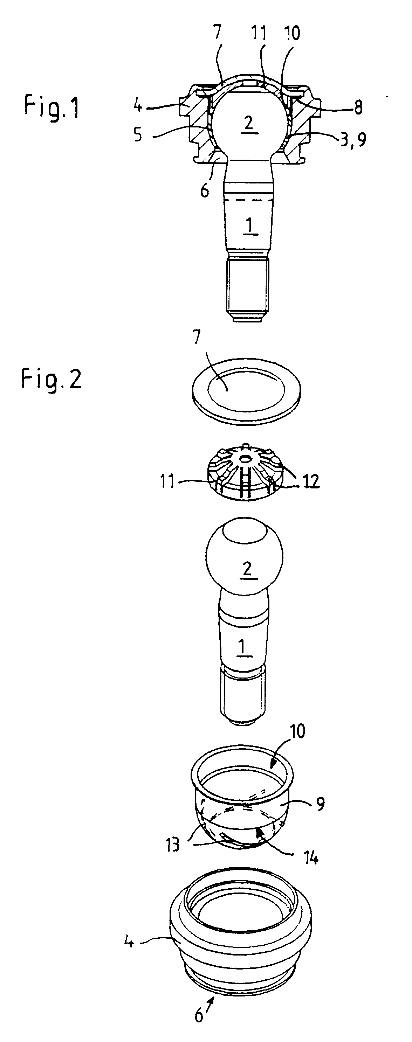

In der Fig. 1 ist ein Kugelgelenk mit einem Kugelzapfen 1 dargestellt, dessen Kugelkopf 2 unter Zwischenlage einer zweiteiligen Lagerschale 3 in ein Gelenkgehäuse 4 eingesetzt ist. Das Gelenkgehäuse 4 nimmt die Lagerschale 3 in einer Gehäuseaufnahme 5 auf, die zu einer Gehäuseöffnung 6 für den Kugelzapfen 1 hin kugelförmig ausgebildet ist. Die Gehäuseaufnahme 5 ist an der der Gehäuseöffnung 6 gegenüberliegenden Stirnseite von einem eingewalzten Verschlußdeckel 7 verschlossen.

Der Verschlußdeckel 7 legt einen umlaufenden Randflansch 8 einer äußeren Lagerschale 9 im Gelenkgehäuse fest. Die äußere Lagerschale 9 ist aus einem hartelastischen Werkstoff, insbesondere aus einem Acetal-Harz wie Polyoxymethylen (POM) hergestellt und weist an der Außenseite Rippen auf, auf die später noch eingegangen wird. In eine verschlußdeckelseitige Ausnehmung 10 der äußeren Lagerschale 9 ist eine innere Lagerschale 11 eingesetzt, die sich stirnseitig an dem Verschlußdeckel 7 abstützt. Die innere Lagerschale 11 ist aus einem weichelastischen Werkstoff, insbesondere aus Polyuretan (PUR) hergestellt und legt die Vorspannung des eingesetzten Kugelkopfes 2 fest. Wie besser aus der Fig. 2 ersichtlich ist, ist die Formelastizität der inneren Lagerschale 11 durch stirnseitige Stützrippen 12 erhöht, die sich unter dem Druck des Verschlußdeckels 7 elastisch verformen.

Wie anhand der Fig. 2 ferner ersichtlich ist, wird beim Zusammenbau des Kugelgelenkes zunächst die mit um die Gelenkachse gewundenen Rippen 13 versehene äußere Lagerschale 9 in das Gelenkgehäuse 4 eingedrückt. Die vor der Montage im Bereich der Rippen kugelförmige äußere Lagerschale 9 erfährt hierbei an ihrer Lagerfläche zwischen den Rippen 13 eine leichte Verformung, so daß sich Schmiertaschen bilden.

Dann wird der Kugelzapfen 1 durch eine Durchtrittsöffnung 14 der äußeren Lagerschale 9 gesteckt, so daß er dreh- und kippbeweglich aus der Gehäuseöffnung 6 herausragt. Danach wird die innere Lagerschale 11 in die Ausnehmung 10 der äußeren Lagerschale 9 ein- und auf den Kugelkopf 2 gesetzt. Schließlich werden die Lagerschalenteile und der Kugelzapfen durch Einwalzen des Verschlußdeckels 7 im Gelenkgehäuse 4 gesichert.

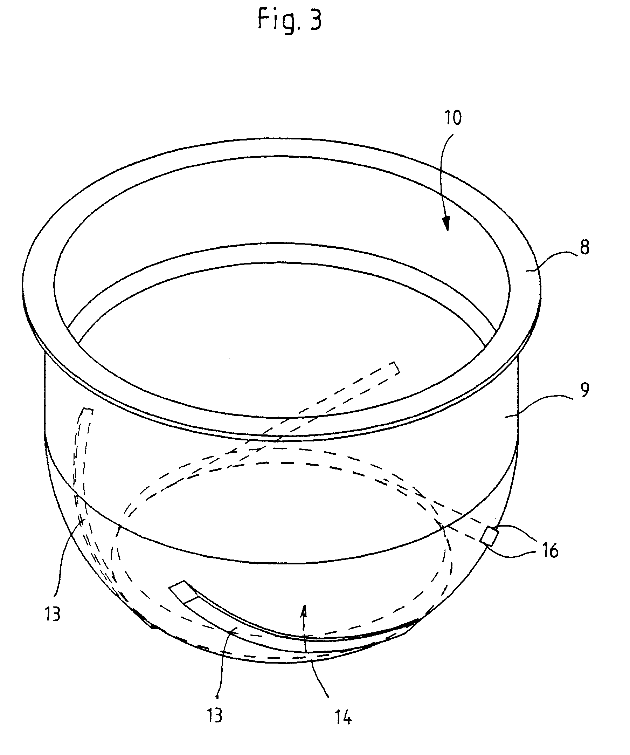

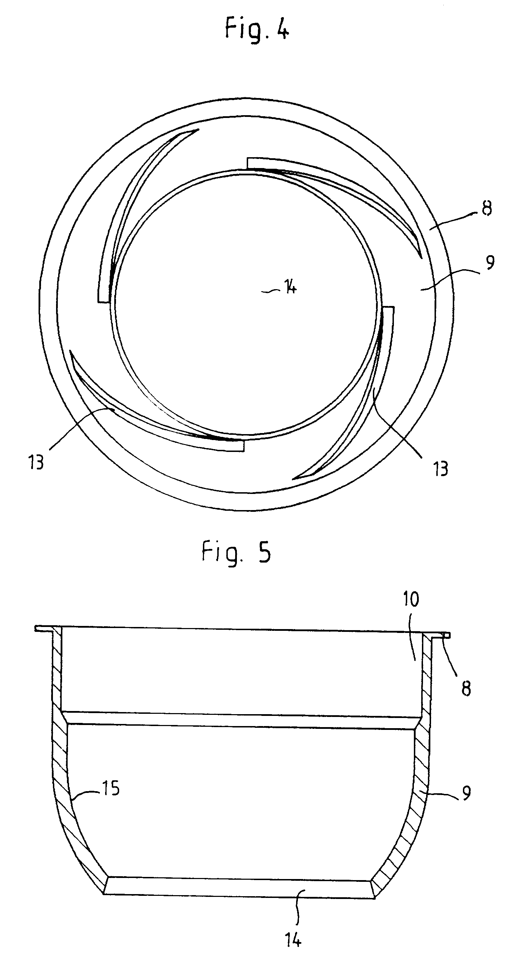

Einzelheiten der äußeren Lagerschale 9 werden nachfolgend anhand der Fig. 3-5 erläutert. Im Bereich der zylindrischen Ausnehmung 10 ist die äußere Lagerschale 9 auch außen zylindrisch ausgebildet. Sie verbindet dort den Randflansch 8 mit ihrem außen kugelförmigen und mit den Rippen 13 versehenen Abschnitt. Da der berippte Abschnitt innen eine kugelförmige Lagerfläche 15 für den Kugelkopf 2 hat, hat er zwischen den Rippen 13 eine konstante Wandstärke, welche die Ausbildung von Schmiertaschen begünstigt. Wenn die äußere Lagerschale 9 nämlich in das Gelenkgehäuse 4 eingesetzt ist und besonders wenn der Kugelkopf 2 unter Vorspannung gegen die Lagerfläche 15 drückt, bauchen sich die dünnwandigen Bereiche zwischen den Rippen 13 aus und bilden Schmiertaschen.

Es sind vier gleichmäßig um die Gelenkachse verteilte Rippen 13 vorgesehen. Die Rippen 13 gehen beinahe tangential von der Durchtrittsöffnung 14 aus und sind in der gleichen Richtung um die Gelenkachse gewunden. Dabei verlaufen die Rippen 13 sowohl in Umfangsrichtung um die Gelenkachse, als auch in Gelenkachsrichtung. Aufgrund der kugelförmigen Ausbildung des berippten Abschnittes der äußeren Lagerschale 9 verlaufen die Rippen 13 zudem in Radialrichtung, so daß sie in der Untersicht jeweils Spiralabschnitte bilden. Jede der Rippen erstreckt sich über einen Winkel von fast 90^{o} um die Gelenkachse, so daß die Rippen zusammen eine Winkelsumme von beinahe 360^{o} um die Gelenkachse haben. Es können sich somit zwischen den Rippen 13 vier spiralförmig um die Gelenkachse angeordnete Schmiertaschen ausbilden. Die Zahl und Position der Rippen 13 bedingt also großflächige und gleichmäßige Schmiertaschen.

Die Höhe der Rippen 13 ist so niedrig gewählt, daß zwischen den Schmiertaschen und der Lagerfläche 15 unter den Rippen 13 ein flacher Übergang entsteht, der ein leichtes Einziehen des Schmiermittels in die Lagerfläche 15 unter den Rippen 13 ermöglicht. Bei der gezeigten Ausführungsform stehen die Rippen 13 mit ihren Seitenwänden 16 senkrecht auf dem Außenmantel der äußeren Lagerschale 9, so daß die Rippen 13 unter dem Einfluß der radialen Kräfte günstig belastet werden. Für die Herstellung der äußeren Lagerschale 9 ist es jedoch günstiger, wenn die Seitenwände 16 in Gelenkachsrichtung ausgerichtet sind.

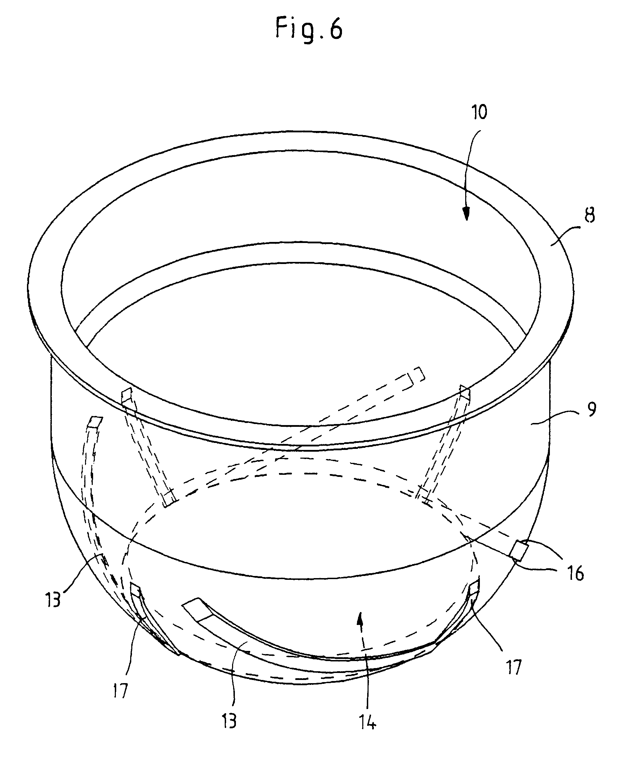

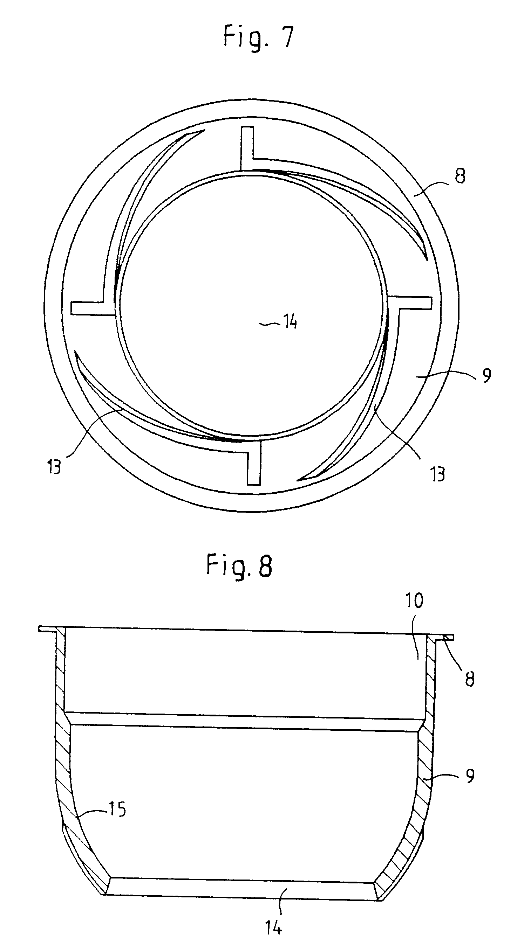

Das Kugelgelenk gemäß Fig. 1 kann auch mit einer äußeren Lagerschale 9 gemäß den Fig. 6 bis 8 ausgerüstet werden. In den Fig. 6 bis 8 wurden identische Bezugsziffern verwendet, soweit die äußere Lagerschale 9 identische Merkmale wie die in den Fig. 3 bis 5 dargestellte Lagerschale 9 aufweist. Die Lagerschale 9 gemäß den Fig. 6 bis 8 hat jedoch zusätzliche meridionale Rippen 17, die in Meridionalrichtung des Kugelkopfes 2 verlaufen. Durch die meridionalen Rippen 17 wird die Anzahl der Schmiertaschen verdoppelt und somit die Schmierwirkung verbessert, ohne daß sich die für die Befettung problematische Lagerfläche 15 unter den Rippen 13 und 17 besonders vergrößert ist.

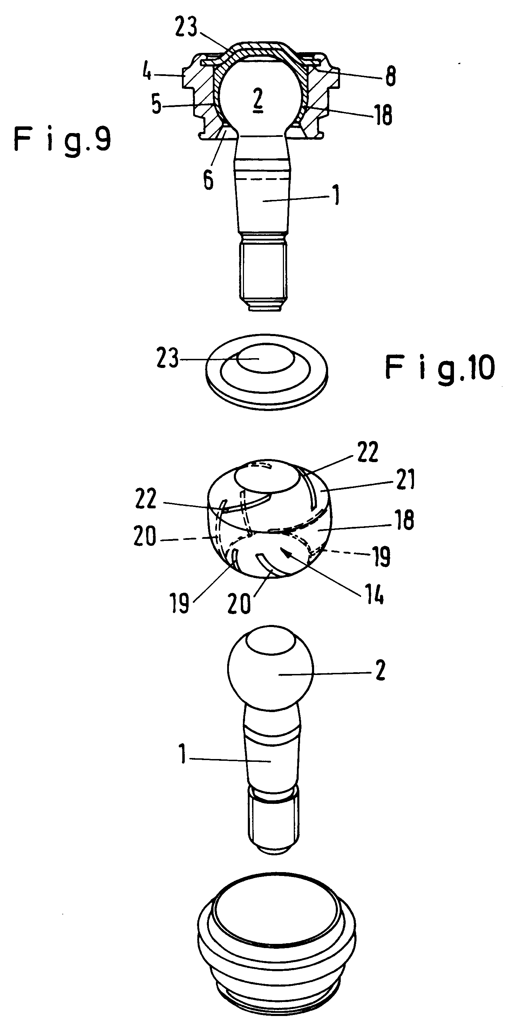

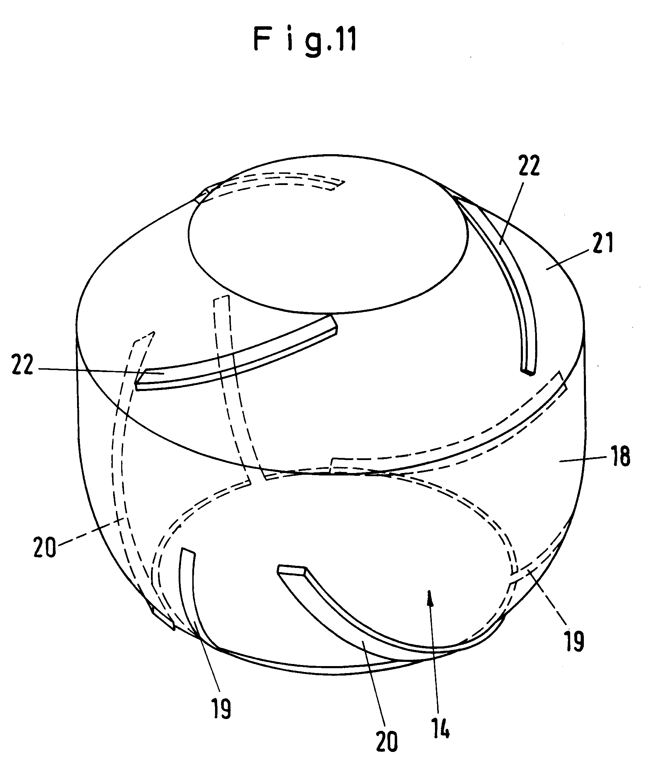

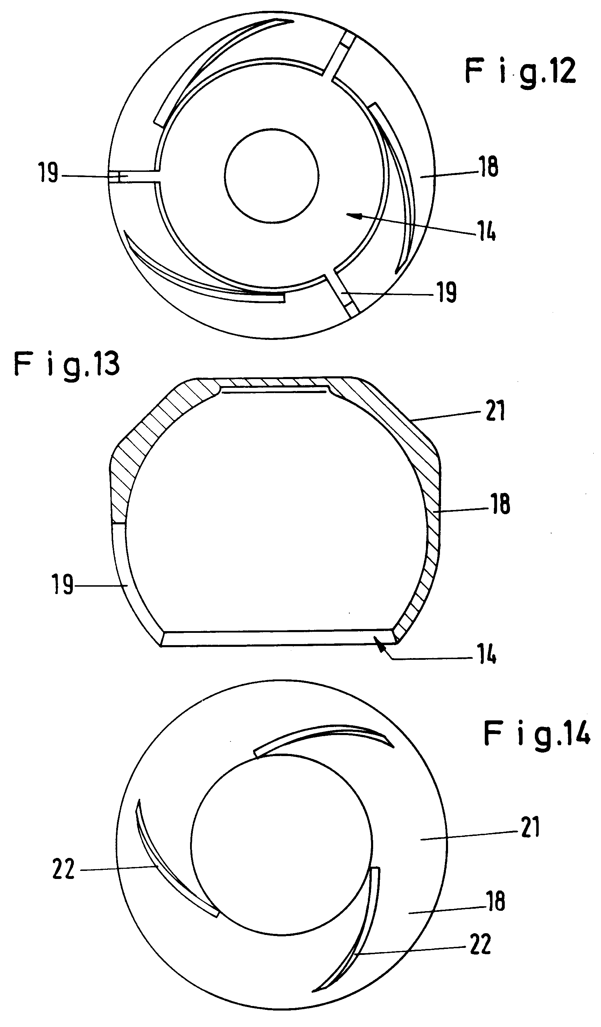

Die Fig. 9 bis 14 zeigen ein weiteres Ausführungsbeispiel, dessen mit den vorstehend beschriebenen Ausführungsbeispielen übereinstimmende Merkmale mit identischen Bezugsziffern bezeichnet sind. Insoweit wird auf die vorstehende Figurenbeschreibung Bezug genommen. Nachfolgend werden noch die verschiedenen Merkmale erläutert.

Das Kugelgelenk hat eine einteilige Lagerschale 18, die mit drei, von der Ausschlagöffnung für den Kugelzapfen 1 ausgehenden Schlitzen 19 versehen ist. Die Schlitze 19 erstrecken sich in Meridionalrichtung bis etwa zu einer senkrecht durch die Gelenkachse verlaufenden Äquatorialebene des Kugelkopfes 2.

Zusätzlich ist die Lagerschale 18 an ihrer Außenseite mit einer Gruppe von drei ersten Rippen 20 versehen, die ausgehend von der Durchtrittsöffnung 14 im Uhrzeigersinn um die Gelenkachse gewunden sind und sich ebenfalls etwa bis zu einer senkrecht durch die Gelenkachse verlaufenden Äquatorialebene des Kugelkopfes 2 erstrecken, ohne die meridionalen Schlitze 19 zu schneiden.

An ihrer geschlossenen Stirnseite ist die Lagerschale 18 kegelstumpfförmig ausgebildet wobei sie auf einem Konus 21 des Kegelstumpfes eine Gruppe von drei zweiten Rippen 22 hat, die gegenläufig zu den ersten Rippen 20 um die Gelenkachse gewunden sind.

Das Gelenkgehäuse 8 ist mittels eines eingewalzten Verschlußdeckels 23 geschlossen, dessen Form der kegelstumpfförmigen Stirnseite der Lagerschale 18 angepasst ist und der eine Zentrierung derselben im Gelenkgehäuse 8 bewirkt.

Auch die Lagerschale 18 kann aus den bereits oben für die Lagerschale 3 angegebenen Materialien hergestellt werden.

Im montierten Kugelgelenk bilden sich jeweils zwischen den ersten Rippen 20 und den zweiten Rippen 22 sowie zwischen diesen beiden voneinander beabstandeten Gruppen von Rippen 20,22 Schmiertaschen aus, die eine gleichmäßige Schmierung der Gleitfläche des Kugelkopfes 2 bewirken. Aufgrund der gegenläufigen Ausbildung der ersten Rippen 20 und zweiten Rippen 22 wird ein spiralförmiger Transport des Schmiermittels aus der Durchtrittsöffnung 14 der Lagerschale 18 heraus vermieden. Eine zusätzliche Schmierwirkung wird durch die schmiernutenbildenden Schlitze 19 erzielt.

## Patentansprüche

1. Kugelgelenk für Kraftfahrzeuge, mit einer zwischen einem Gelenkgehäuse (4) und einem Kugelkopf (2) eines dreh- bzw. kippbeweglichen Kugelzapfens (1) eingesetzten Lagerschale (3,9,18) aus einem elastischen Kunststoff, die sich mit Rippen (13,17) an ihrer Außenseite im Gelenkgehäuse (4) abstützt, wobei unter dem Einfluß einer Gelenkvorspannung oder -belastung auf der Innenseite der Lagerschale (3,9,18) in den zwischen den Rippen liegenden Bereichen Schmiertaschen ausgebildet sind
**dadurch gekennzeichnet,**
daß die Rippen (13) der Lagerschale (3,9,18) bezüglich der Gelenkachse (Achse des ungekippten Kugelzapfens) schräg verlaufend gewunden sind.

2. Kugelgelenk nach Anspruch 1, dadurch gekennzeichnet, daß die mit den um die Gelenkachse gewundenen Rippen versehene Lagerschale (3) aus einem hartelastischen Kunststoff, insbesondere aus einem Acetal-Harz besteht.

3. Kugelgelenk nach einem der Ansprüche 1 bis 2, dadurch gekennzeichnet, daß die Rippen (13) der Lagerschale (3) gleichmäßig um die Gelenkachse verteilt sind.

4. Kugelgelenk nach einem der Ansprüche 1 bis 3, dadurch gekennzeichnet, daß die Rippen (13) alle in der gleichen Richtung gewunden sind.

5. Kugelgelenk nach einem der Ansprüche 1 bis 4, dadurch gekennzeichnet, daß die Summe der Windungswinkel aller Rippen (13) um die Gelenkachse etwa 360^{o} oder mehr beträgt.

6. Kugelgelenk nach einem der Ansprüche 1 bis 5, dadurch gekennzeichnet, daß vier Rippen (13) um die Gelenkachse gewunden sind.

7. Kugelgelenk nach einem der Ansprüche 1 bis 6, dadurch gekennzeichnet, daß die Rippen (13) etwa tangential von einem Rand einem Durchtrittsöffnung (14) der Lagerschale (3) für den Kugelzapfen (1) ausgehen.

8. Kugelgelenk nach Anspruch 7, dadurch gekennzeichnet, daß die Rippen (13) zumindest bis zu einer senkrecht durch die Gelenkachse verlaufenden Äquatorialebene des Kugelkopfes (2) gewunden sind.

9. Kugelgelenk nach einem der Ansprüche 1 bis 8, dadurch gekennzeichnet, daß die Rippen (13) auf einem kugelförmigen Abschnitt der Lagerschale angeordnet sind und sich an einer kugelförmigen Gehäuseaufnahme (5) abstützen.

10. Kugelgelenk nach einem der Anspüche 1 bis 9, dadurch gekennzeichnet, daß die Lagerschale (3) zusätzlich meridional verlaufende Rippen (17) aufweist, die jeweils von einem Ende einer gewundenen Rippe (13) ausgehen und deren Erstreckung in Gelenkachsrichtung etwa derjenigen der gewundenen Rippen (13) entspricht.

11. Kugelgelenk nach einem der Ansprüche 1 bis 10, dadurch gekennzeichnet, daß die Seitenwände (16) der Rippen (13,17) in Gelenkachsrichtung ausgerichtet sind.

12. Kugelgelenk nach einem der Ansprüche 1 bis 11, dadurch gekennzeichnet, daß die Lagerschale (3) zweiteilig ausgebildet ist, wobei eine mit um die Gelenkachse gewundenen Rippen (13) versehene äußere Lagerschale (9) stirnseitig eine Ausnehmung (10) für eine weichelastische innere Lagerschale (11) hat.

13. Kugelgelenk nach einem der Ansprüche 1 bis 12, dadurch gekennzeichnet, daß die Lagerschale (18) meridional verlaufende Schlitze (19) aufweist, die von der Durchtrittsöffnung (14) für den Kugelzapfen (1) ausgehen.

14. Kugelgelenk nach Anspruch 13, dadurch gekennzeichnet, daß sich die meridionalen Schlitze (19) etwa bis zu einer senkrecht durch die Gelenkachse verlaufenden Äquatorialebene des Kugelkopfes (2) erstrecken.

15. Kugelgelenk nach einem der Ansprüche 13 oder 14, dadurch gekennzeichnet, daß die Rippen (22) an der geschlossenen Stirnseite der Lagerschale (18) angeordnet sind und sich höchstens bis zum Ende der durch die Schlitze (19) bestimmten Umfangslinie erstrecken.

16. Kugelgelenk nach einem der Ansprüche 1 bis 15, dadurch gekennzeichnet, daß die Lagerschale (18) zwei Gruppen von Rippen (20,21) hat, die auf verschiedenen Seiten einer senkrecht zur Gelenkachse verlaufenden Ebene angeordnet und in verschiedenen Richtungen gewunden sind.

## Claims

1. Ball joint for motor vehicles, having a bearing shell (3, 9, 18) of a flexible plastic which is fitted between a joint housing (4) and a ball head (2) of a rotatingly and tiltingly movable ball pin (1) and is supported by ribs (13, 17) on its outer side in the joint housing (4), lubricating pockets being formed in the areas lying between the ribs by the effect of a joint prestressing or loading on the inner side of the bearing shell (3, 9, 18), characterised in that the ribs (13) of the bearing shell (3, 9, 18) are helically twisted with respect to the axis of the joint (axis of the untilted ball pin).

2. Ball joint according to Claim 1, characterised in that the bearing shell (3) provided with the ribs twisted about the axis of the joint consists of a hard-flexible plastic, in particular of an acetal resin.

3. Ball joint according to one of Claims 1 or 2, characterised in that the ribs (13) of the bearing shell (3) are distributed uniformly about the axis of the joint.

4. Ball joint according to one of Claims 1 to 3, characterised in that the ribs (13) are all twisted in the same direction.

5. Ball joint according to one of Claims 1 to 4, characterised in that the sum of the angles of twist of all the ribs (13) about the axis of the joint is about 360° or more.

6. Ball joint according to one of Claims 1 to 5, characterised in that four ribs (13) are twisted about the axis of the joint.

7. Ball joint according to one of Claims 1 to 6, characterised in that the ribs (13) extend approximately tangentially from one edge of a through-opening (14) of the bearing shell (13) for the ball pin (1).

8. Ball joint according to Claim 7, characterised in that the ribs (13) are twisted at least up to an equatorial plane of the ball head (2), running perpendicularly through the axis of the joint.

9. Ball joint according to one of Claims 1 to 8, characterised in that the ribs (13) are arranged on a spherical section of the bearing shell and are supported on a spherical housing support (5).

10. Ball joint according to one of Claims 1 to 9, characterised in that the bearing shell (3) additionally has meridionally running ribs (17), which in each case extend from one end of a twisted rib (13) and the extent of which in the axial direction of the joint corresponds approximately to that of the twisted ribs (13).

11. Ball joint according to one of Claims 1 to 10, characterised in that the side walls (16) of the ribs (13, 17) are aligned in the axial direction of the joint.

12. Ball joint according to one of Claims 1 to 11, characterised in that the bearing shell (3) is of a two-part design, an outer bearing shell (9), provided with ribs (13) twisted about the axis of the joint, having on the end face a clearance (10) for a soft-flexible inner bearing shell (11).

13. Ball joint according to one of Claims 1 to 12, characterised in that the bearing shell (18) has meridionally running slits (19), which extend from the through-opening (14) for the ball pin (1).

14. Ball joint according to Claim 13, characterised in that the meridional slits (19) extend approximately up to an equatorial plane of the ball head (2) running perpendicularly through the axis of the joint.

15. Ball joint according to one of Claims 13 or 14, characterised in that the ribs (22) are arranged on the closed end face of the bearing shell (18) and extend at most up to the end of the circumferential line defined by the slits (19).

16. Ball joint according to one of Claims 1 to 15, characterised in that the bearing shell (18) has two groups of ribs (20, 21), which are arranged on different sides of a plane running perpendicularly to the axis of the joint and are twisted in different directions.

## Revendications

1. Joint à rotule pour véhicules à moteur, comprenant un coussinet (3, 9, 18) de matière plastique élastique qui est installé entre une cage (4) et une tête sphérique (2) d'un pivot à rotule (1) mobile en rotation et en inclinaison, ledit coussinet prenant appui par des nervures (13, 17) de son côté extérieur dans la cage (4) du joint, des poches de graissage étant formées sur le côté intérieur du coussinet (3, 9, 18), dans les régions situées entre les nervures, sous l'effet d'une précontrainte ou d'une charge du joint, caractérisé en ce que les nervures (13) du coussinet (3, 9, 18) sont torses et orientées obliquement par rapport à l'axe d'articulation (axe du pivot à rotule non incliné).

2. Joint à rotule selon la revendication 1, caractérisé en ce que le coussinet (3) comportant des nervures torses autour de l'axe d'articulation est en matière plastique élastique dure, en particulier en une résine d'acétal.

3. Joint à rotule selon l'une des revendications 1 à 2, caractérisé en ce que les nervures (13) du coussinet (3) sont réparties régulièrement autour de l'axe d'articulation.

4. Joint à rotule selon l'une des revendications 1 à 3, caractérisé en ce que toutes les nervures (13) sont torses dans le même sens.

5. Joint à rotule selon l'une des revendication 1 à 4, caractérisé en ce que la somme des angles de torsion de toutes les nervures (13) autour de l'axe d'articulation est d'environ 360° ou davantage.

6. Joint à rotule selon l'une des revendications 1 à 5, caractérisé en ce que quatre nervures (13) sont torses autour de l'axe d'articulation.

7. Joint à rotule selon l'une des revendications 1 à 6, caractérisé en ce que les nervures (13) partent à peu près tangentiellement d'un bord d'une ouverture de passage (14) du coussinet (3) qui est destinée au pivot à rotule (1).

8. Joint à rotule selon la revendication 7, caractérisé en ce que les nervures torses (13) atteignent au moins un plan équatorial de la tête sphérique (2) qui est perpendiculaire à l'axe d'articulation.

9. Joint à rotule selon l'une des revendications 1 à 8, caractérisé en ce que les nervures (13) sont disposées sur une partie sphérique du coussinet et prennent appui contre un logement sphérique (5) de la cage.

10. Joint à rotule selon l'une des revendications 1 à 9, caractérisé en ce que le coussinet (3) comporte accessoirement des nervures (17) orientées suivant des méridiens, chacune partant d'une extrémité d'une nervure torse (13) et leur dimension dans la direction de l'axe d'articulation correspondant approximativement à celle des nervures torses (13).

11. Joint à rotule selon l'une des revendications 1 à 10, caractérisé en ce que les parois latérales (16) des nervures (13, 17) sont orientées dans la direction de l'axe d'articulation.

12. Joint à rotule selon l'une des revendications 1 à 11, caractérisé en ce que le coussinet (3) est en deux pièces dont l'une, qui est un coussinet extérieur (9) comportant des nervures (13) qui sont torses autour de l'axe d'articulation, comporte sur le côté extrême une cavité (10) destinée à un coussinet intérieur souple (11).

13. Joint à rotule selon l'une des revendications 1 à 12, caractérisé en ce que le coussinet (18) comporte des fentes (19) orientées suivant des méridiens et partant de l'ouverture de passage (14) destinée au pivot à rotule (1).

14. Joint à rotule selon la revendication 13, caractérisé en ce que les fentes méridiennes (19) se prolongent à peu près jusqu'à un plan équatorial de la tête sphérique (2) qui est perpendiculaire à l'axe d'articulation.

15. Joint à rotule l'une l'une des revendications 13 ou 14, caractérisé en ce que les nervures (22) sont disposées sur le côté extrême fermé du coussinet (18) et se prolongent au maximum jusqu'à l'extrémité de la ligne circonférentielle déterminée par les fentes (19).

16. Joint à rotule selon l'une des revendications 1 à 15, caractérisé en ce que le coussinet (18) comprend deux groupes de nervures (20, 21) qui sont disposées sur des côtés différents d'un plan perpendiculaire à l'axe d'articulation et qui sont torses dans des directions différentes.
